# EUROPÄISCHE PATENTSCHRIFT

(11) **EP 2 440 439 B1**
(45) Veröffentlichungstag und Bekanntmachung des Hinweises auf die Patenterteilung: **13.03.2013**
(21) Anmeldenummer: 10717140.7
(22) Anmeldetag: 03.05.2010
(51) Int. Cl.: B60W 30/02, B60W 30/18

(54) **VERFAHREN ZUR ERZEUGUNG EINES AUF DIE FAHRZEUGRÄDER EINES FAHRZEUGS WIRKENDEN DIFFERENZMOMENTS**
METHOD FOR GENERATING A DIFFERENTIAL TORQUE ACTING ON THE VEHICLE WHEELS OF A VEHICLE
PROCÉDÉ DE PRODUCTION D'UN COUPLE DIFFÉRENTIEL AGISSANT SUR LES ROUES D'UN VÉHICULE

(30) Priorität: 08.06.2009 DE 102009026813
(43) Veröffentlichungstag der Anmeldung: 18.04.2012
(73) Patentinhaber: Robert Bosch GmbH, 70442 Stuttgart (DE)
(72) Erfinder: VLIET, Peter, 71638 Ludwigsburg (DE)
(86) Internationale Anmeldenummer: PCT/EP2010/055965
(87) Internationale Veröffentlichungsnummer: WO 2010/142496

(56) Entgegenhaltungen:
- WO-A1-99/67115
- WO-A1-2005/042294
- WO-A2-2007/148225
- DE-A1-102004 035 004
- US-A1- 2003 037 977

## Beschreibung

Die Erfindung bezieht sich auf ein Verfahren zur Erzeugung eines auf die Fahrzeugräder eines Fahrzeugs wirkenden Differenzmoments nach dem Oberbegriff des Anspruches 1.

### Stand der Technik

In der DE 10 2006 031 511 A1 wird ein Verfahren zum Stabilisieren eines Fahrzeugs in einer fahrdynamischen Grenzsituation beschrieben, insbesondere beim Über- oder Untersteuem des Fahrzeugs, in der ein Fahrzeugregler durch automatisches Betätigen wenigstens einer Radbremse in den Fahrbetrieb eingreift. Die Ansteuerung der Radbremse erfolgt mithilfe eines Fahrzeugregelsystems, insbesondere eines ESP-Systems (elektronisches Stabilitätsprogramm).

Ein automatischer Eingriff in die resultierenden Momente an den Fahrzeugrädern kann auch mit dem Ziel durchgeführt werden, das dynamische Verhalten des Fahrzeugs zu verbessern. So ist es beispielsweise bekannt, über einen so genannten Torque-Vectoring-Steller eine aktive Verteilung von Antriebsmomenten auf die linken und rechten Fahrzeugräder durchzuführen. Hierbei ist jedoch darauf zu achten, dass durch einen derartigen Eingriff in fahrdynamischen Grenzsituationen keine Destabilisierung des Fahrzeugs bewirkt wird.

Die gattungabildende DE 10 2004 035 004 A1 offenbart ein Verfahren zur Erhöhung der Fahrstabilität eines Kraftfahrzeugs, bei der eine modellgestützte Vorsteuerung benutzt wird, um ein kompensierendes bzw. stabilisierendes Giermoment auf das Kraftfahrzeug aufzubringen. Die Vorsteuerung soll hierbei gegenüber einer Regelung den Vorteil aufweisen, dass die bei der Regelung auftretende zeitliche Verzögerung bei der Ermittlung und Durchführung des stabilisierenden Eingriffs vermieden wird. Die modellgestützte Vorsteuerung reagiert bereits auf der Grundlage der Größen, die eine nachfolgende Änderung oder Abweichung hervorrufen würden, falls keine Kompensationsgröße durch die Vorsteuerung erzeugt werden würde.

Die WO 99/67115 A1 betrifft eine Regelschaltung zum Regeln der Fahrstabilität eines Fahrzeugs, wobei wenigstens ein Parameter der Regelschaltung in Abhängigkeit von wenigstens einer separat ermittelten Messgröße variiert wird. Hierdurch soll eine Adaption eines rechnerischen Fahrzeugmodells, das der Regelschaltung zugrunde liegt, durch Identifikation der fahrzeugspezifischen Normparameter mithilfe der fahrzeugeigenen Sensorik vorgenommen werden. Hintergrund ist es, dass durch unterschiedliche Ausbildungs- oder Ausstattungsvarianten der Fahrzeuge, beispielsweise Winterreifen/Sommerreifen, sich erhebliche Unterschiede von Normwerten ergeben können, die über die Ermittlung des Parameters in Abhängigkeit aktueller Messgrößen berücksichtigt werden können.

Die WO 2005/042294 A1 offenbart, im Falle eines durch sprungartige Gaswegnahme erzeugten Lastwechsels ein Getriebeausgangsmoment zu reduzieren.

### Offenbarung der Erfindung

Der Erfindung liegt die Aufgabe zu Grunde, im Falle eines auf die Fahrzeugräder eines Fahrzeugs wirkenden Differenzmoments eine Destabilisierung des Fahrzeugs zu verhindern.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren liegen in definierten Fahrsituationen unterschiedlich hohe Radmomente an mindestens zwei Fahrzeugrädern an, insbesondere an einem linken und einem rechten Fahrzeugrad. Es handelt sich bei den anliegenden Radmomenten um resultierende Momente, die sich aus Brems- und/oder Antriebsmomenten zusammensetzen können, wobei im Rahmen der Erfindung es grundsätzlich ausreicht, nur ein Bremsmoment oder nur ein Antriebsmoment auf ein Fahrzeugrad wirken zu lassen. Des Weiteren ist es sowohl möglich, dass an beiden Fahrzeugrädern ein Radmoment wirksam ist, wobei sich die Höhe des Radmomentes unterscheidet, als auch die Situation, dass nur an einem Fahrzeugrad ein resultierendes Radmoment wirksam ist und das gegenüberliegende Fahrzeugrad keine Brems- oder Antriebsmomente erfährt.

Um ein unerwünschtes Verhalten des Fahrzeugs in einer fahrdynamischen Grenzsituation, in der das Fahrzeug eine Änderung des Fahrzustandes durch Lastwechsel erfährt, zu vermeiden, wird nach dem Detektieren einer derartigen Situation die Momentenverteilung zwischen den Fahrzeugrädern geändert. Auf diese Weise wird in den fahrdynamischen Zustand des Fahrzeugs eingegriffen, so dass beispielsweise einem Über oder Untersteuem vorgebeugt oder ein derartiges Fahrverhalten zumindest reduziert werden kann.

Der Eingriff in die Radmomentenverteilung hängt vom Vorliegen eines Lastwechsels ab. Bei einem Lastwechsel wird innerhalb kurzer Zeit vom Zug- in den Schubzustand oder umgekehrt gewechselt, und zwar durch plötzliches Lösen oder plötzliche Betätigung des Gaspedals, ggf. in Kombination mit einem Bremseneingriff eines Fahrerassistenzsystems oder durch den Fahrer. Befindet sich das Fahrzeug während eines Lastwechsels in einem fahrdynamischen Grenzbereich, in welchem sich das Fahrzeug zwar noch stabil auf seiner Solltrajektorie bewegt, jedoch bereits bei einer geringfügigen Änderung, insbesondere einer Geschwindigkeitserhöhung instabil wird, so können Lastwechsel ohne die erfindungsgemäße Funktion im Falle einer bereits vorhandenen Radmomentendifferenz zu einem Übersteuern, ggf. auch einem Untersteuem des Fahrzeuges führen. Über den Eingriff in die Momentenverteilung zwischen Fahrzeugrädern, vorzugsweise zwischen angetriebenen Fahrzeugrädern, kann dagegen das Fahrverhalten stabilisiert werden, so dass sich der plötzlich auftretende Lastwechsel nicht negativ auf das Fahrzeugverhalten auswirkt.

Es ist vorgesehen, dass die Momentenverteilung zwischen den Fahrzeugrädern in der Weise geändert wird, dass dasjenige Fahrzeugrad mit dem ursprünglich niedrigeren resultierenden Radmoment - ggf. auch mit einem resultierenden Radmoment gleich null - nun mit einem Radmomentenwert beaufschlagt wird, der das an dem anderen Fahrzeugrad anliegende Radmoment übersteigt. Hierbei kommt sowohl die Situation in Betracht, dass das Radmoment an einem Fahrzeugrad konstant gehalten wird und das Radmoment am anderen Fahrzeugrad zur Umkehrung der Momentenverhältnisse erhöht bzw. verringert wird, als auch die Situation, dass die resultierenden Radmomente an beiden Fahrzeugrädern geändert werden, bis das gewünschte neue Momentenverhältnis eingestellt ist. Die Beeinflussung der resultierenden Radmomente erfolgt vorzugsweise über einen Bremseneingriff. Grundsätzlich ist aber auch eine Kombination von Bremseneingriff und Verteilung von Antriebs- und/oder Schleppmomenten oder eine Beeinflussung ausschließlich über die Antriebs- und/oder Schleppmomente möglich.

Der absolute Wert der resultierenden Radmomente an jedem Fahrzeugrad hängt nach der Neueinstellung der Momentenverteilung von diversen Zustandsgrößen des Fahrzeugs ab und wird insbesondere in der Weise festgelegt, dass die Sollbahn, auf der sich das Fahrzeug bewegt, beibehalten werden kann. Die neu justierte Momentenverteilung ist bezogen auf die Höhe der Momente insbesondere nicht zwangsläufig spiegelbildlich zur ursprünglichen Momentenverteilung, auch wenn eine derartige Umkehrung der Momentenverteilung grundsätzlich möglich ist.

Zweckmäßigerweise erfolgt die Momentenverteilung an den Rädern links und rechts einer gemeinsamen Achse. Möglich ist aber auch eine Momentenverteilung über die Räder unterschiedlicher Achsen an unterschiedlichen Seiten oder auch an gemeinsamen Seiten sowie eine Momentenverteilung über drei oder vier Fahrzeugräder.

Um festzustellen, ob sich das Fahrzeug in einer fahrdynamischen Grenzsituation befindet, können verschiedene Kriterien überprüft werden. Gemäß einer vorteilhaften Ausführung ist vorgesehen, dass für das Vorliegen einer fahrdynamischen Grenzsituation überprüft wird, ob das Differenzmoment, gebildet aus Differenz der resultierenden, betrachteten Radmomente, einen Grenzwert überschreitet. Das Differenzmoment wird benutzt, um das Fahrverhalten eines Fahrzeugs im Hinblick auf das Eigenlenkverhalten und/oder die Traktion zu verändern, und ist ein Maß für die Ausnutzung der Kraftkapazität an der betroffenen Achse.

Das Differenzmoment kann als Zusatzfunktion eines ESP-Systems (elektronisches Stabilitätsprogramm) generiert werden, mit dem unterschiedlich hohe Radbremsmomente auf die verschiedenen Fahrzeugräder zur Beeinflussung des fahrdynamischen Fahrzeugverhaltens erzeugt werden. Hierbei wird insbesondere am kurveninneren Hinterrad, ggf. auch am kurvenäußeren Vorderrad, ein Bremsgriff eingeführt, was den positiven Effekt hat, dass die maximale Kurvengeschwindigkeit erhöht wird. Das Differenzmoment wird gemäß weiterer zweckmäßiger Ausführung aus der über eine Messung ermittelten Ist-Gierrate des Fahrzeugs und einer berechneten Soll-Gierrate bestimmt, in die insbesondere die aktuelle Fahrzeuggeschwindigkeit eingeht. Da das Differenzmoment als Reglerzusatzfunktion zu einem ESP-System bereits auf eine fahrdynamische Grenzsituation abgestimmt ist, kann der Wert des Differenzmomentes, also der Unterschied zwischen den Radmomenten, zur Detektion einer fahrdynamischen Grenzsituation herangezogen werden. Liegt das Differenzmoment über einem zugeordneten Grenzwert, kann von einer fahrdynamischen Grenzsituation ausgegangen werden. Das Differenzmoment stellt einen Indikator für die Ausnutzung des Kraftschlusspotenzials zwischen Reifen und Fahrbahn für das sich im Grenzbereich befindende Fahrzeug dar.

Das Differenzmoment kann einer Filterung unterzogen werden. Aufgrund der Filterung bleiben kurze Spitzenwerte, die fahrdynamisch nur eine geringe Bedeutung haben, außer Betracht. Nur bei einem andauernd großen Differenzmoment wird von einer Grenzsituation ausgegangen. Falls der Wert des Differenzmoments über eine längere Phase groß ist, sich jedoch zum Zeitpunkt des Lastwechsels bereits wieder verringert hat, sollte im Normalfall trotzdem eine Stabilisierung durchgeführt werden. Mittels der Filterung wird das Differenzmoment aus zurückliegenden Phasen mit berücksichtigt, das gefilterte Differenzmoment verringert sich mit einem Phasenverzug, der als Information genutzt wird.

Der dem Differenzmoment zugeordnete Grenzwert wird als feste Größe vorgegeben, die lediglich von fahrzeugtypischen Einstellungen abhängt, nicht jedoch von aktuellen Zustandsgrößen. Grundsätzlich möglich ist es aber auch, den Grenzwert für das Differenzmoment im Fahrzeug in Abhängigkeit aktueller Zustandsgrößen zu bestimmen.

Der Zustand des Lastwechsels kann über eine Untersuchung des Verlaufs des Antriebsmoments oder einer damit korrelierenden Größe detektiert werden. Da nur bei einem Lastwechsel die Verteilung der Radmomente geändert werden soll, ist eine sichere Erfassung eines aktuellen Lastwechsels im Fahrzeug von erheblicher Bedeutung. Dies erfolgt durch Auswertung des Antriebsmomentes oder einer damit zusammenhängenden Größe, beispielsweise eines Kardanmomentes, das in einer Kardanwelle des Fahrzeugs wirksam ist. Als Antriebsmoment kommt das ausgangsseitig anliegende Moment in Betracht, das an einem dem Antriebsmotor nachgeschalteten Getriebe anliegt. Gegebenenfalls kann, unter Berücksichtigung des Übersetzungsverhältnisses im Getriebe, auch das Motormoment für die Untersuchung eines Lastwechsels herangezogen werden.

Um mit hoher Sicherheit den Lastwechsel detektieren zu können, wird das Antriebsmoment bzw. das damit zusammenhängende Moment einer Filterung unterzogen, beispielsweise einer Tiefpassfilterung, und anschließend die Differenz von ungefiltertem und gefiltertem Moment gebildet. In dieser Momentendifferenz drücken sich plötzliche Gaspedaländerungen durch den Fahrer aus, aus denen auf einen Lastwechsel geschlossen werden kann. Ein Lastwechsel liegt vor, wenn die Differenz aus gefiltertem und ungefiltertem Moment einen zugeordneten Grenzwert überschreitet.

Sofern alle Bedingungen vorliegen, also sowohl die fahrdynamische Grenzsituation als auch ein Lastwechsel vor- bzw. anliegt, wird in der vorbeschriebenen Weise die Momentenverteilung geändert, um das Fahrzeug stabil zu halten.

Das erfindungsgemäße Verfahren wird in einem Regel- bzw. Steuergerät durchgeführt, welches Teil eines Fahrerassistenzsystems sein kann oder einem derartigen Fahrerassistenzsystem, beispielsweise einem elektronischen Stabilitätsprogramm ESP, zugeordnet sein kann.

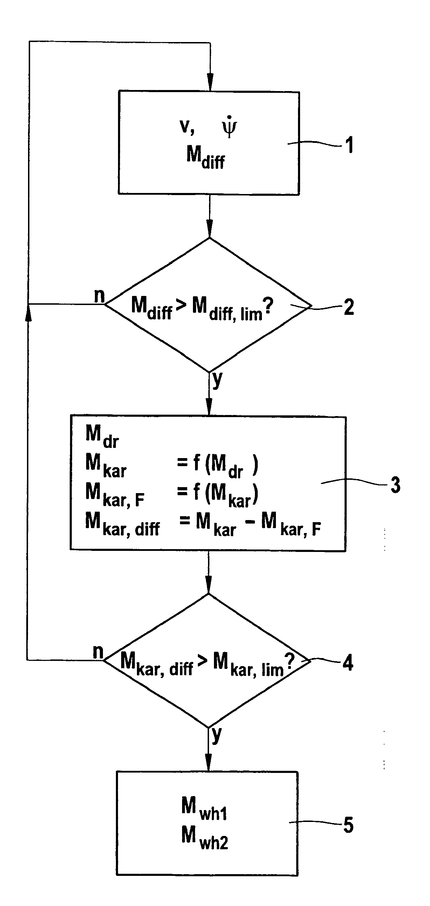

Weitere Vorteile und zweckmäßige Ausführungen sind den weiteren Ansprüchen, der Figurenbeschreibung und der Zeichnung zu entnehmen, in der ein Ablaufdiagramm mit den Verfahrensschritten zur Durchführung des Verfahrens dargestellt ist.

Zur Durchführung des Verfahrens wird hardwareseitig eine Stelleinrichtung vorausgesetzt, mit der das Radmoment an mindestens zwei Fahrzeugrädern beeinflusst werden kann. Bei dieser Stelleinrichtung handelt es sich beispielsweise um die Radbremseinrichtung, die es ermöglicht, automatisch Radbremsmomente in unterschiedlicher Höhe an den verschiedenen Fahrzeugrädern zu erzeugen. Darüber hinaus kommt auch ein aktives Kupplungsglied (Torque Vectoring Differenzial) zur Verteilung von Antriebsmomenten zwischen verschiedenen Antriebsrädern in Betracht.

Der in der Zeichnung gezeigte Verfahrensablauf setzt voraus, dass über eine Stelleinrichtung bereits ein wirksames Differenzmoment M_{diff} an zwei unterschiedlichen Fahrzeugrädern anliegt, insbesondere an den Rädern einer gemeinsamen Achse. Um eine Änderung des Differenzmomentes M_{diff} mit zugehörigen Radmomenten M_{wh1,} M_{wh2} für den Fall eines Lastwechsels in einer grenzstabilen Fahrsituation durchzuführen, wird zunächst abgeprüft, ob diese weiteren Voraussetzungen - grenzstabile Fahrsituation und Lastwechsel - vorliegen.

In einem ersten Verfahrensschritt 1 werden zunächst mit der fahrzeugeigenen Sensorik diverse Zustandsgrößen erfasst bzw. aus Messgrößen ermittelt. Bei dieser Sensorik handelt es sich beispielsweise um die ESP-Sensorik. Erfasst werden unter anderem die Fahrzeuggeschwindigkeit v sowie die Ist-Gierrate ψ̇. Aus der Fahrzeuggeschwindigkeit v sowie ggf. weiteren Zustandsgrößen, insbesondere querdynamischen Größen wie die Fahrzeugquerbeschleunigung, kann eine Soll-Gierrate ψ̇*_{d}* ermittelt werden, wobei aus der Ist-Gierrate ψ̇ und der Soll-Gierrate ψ̇*_{d}* ein Wert für eine Momentendifferenz M_{diff} ermittelt werden kann. Diese Momentendifferenz liegt als Ausgangsgröße in einem Regler insbesondere des ESP-Systems an und wird vorzugsweise in grenzdynamischen Fahrsituationen ermittelt und über eine Stelleinrichtung des Fahrzeugs vorgegeben, vorzugsweise über eine Verteilung von Radbremsmomenten, um einen gezielten Einfluss auf die Fahrdynamik des Fahrzeugs zu nehmen. Über die Momentendifferenz M_{diff} kann beispielsweise eine Untersteuertendenz vermieden werden, um ein sportlicheres Fahrverhalten zu erzeugen.

Da zugleich die ermittelte Momentendifferenz M_{diff} einen Indikator für den Reibwert zwischen Reifen und Fahrbahn darstellt, kann über eine Auswertung der Momentendifferenz ein fahrdynamischer Grenzzustand festgestellt werden. Hierzu wird im Verfahrensschritt 2 überprüft, ob die Momentendifferenz M_{diff} einen zugeordneten Grenzwert M_{diff,lim} überschreitet. Ist dies nicht der Fall, liegt noch keine fahrdynamische Grenzsituation vor, die eine Änderung der aktuellen Momentenverteilung erforderlich macht. In diesem Fall wird der nein-Verzweigung ("N") folgend wieder zum Beginn des ersten Verfahrensschrittes zurückgekehrt.

Anderenfalls ist die erste Bedingung für eine Änderung der Momentenverteilung erfüllt und es wird der ja-Verzweigung ("Y") folgend zum nächsten Verfahrensschritt 3 fortgefahren. In den Verfahrensschritten 3 und 4 erfolgt eine Überprüfung der zweiten Bedingung, ob aktuell ein Lastwechsel im Fahrzeug stattfindet. Hierfür wird zunächst im Verfahrensschritt 3 das aktuellen Antriebsmoment M_{dr} ermittelt, aus dem ein in einer Kardanwelle wirkendes Kardanmoment Mₖₐᵣ berechnet wird, welches als Funktion des Antriebsmomentes M_{dr} darstellbar ist. Das Kardanmoment Mₖₐᵣ wird einer Filterung unterzogen, wobei das gefilterte Kardanmoment M_{kar,F} als Funktion des ungefilterten Kardanmoments Mₖₐᵣ darstellbar ist. Anschließend wird die Differenz M_{kar,diff} zwischen ungefiltertem Kardanmoment Mₖₐᵣ und gefiltertem Kardanmoment M_{kar,diff} gebildet.

Im folgenden Verfahrensschritt 4 erfolgt eine Abfrage, ob die Momentendifferenz M_{kar,diff} einen zugeordneten Grenzwert M_{kar,lim} überschreitet. Ist dies der Fall, kann von einem Lastwechsel im Fahrzeug ausgegangen werden, woraufhin der ja-Verzweigung folgend zum nächsten Verfahrensschritt 5 fortgefahren wird. Anderenfalls wird der nein-Verzweigung folgend wieder zum ersten Verfahrensschritt zurückgekehrt, und es erfolgt ein erneuter Ablauf des gesamten Verfahrens.

Im Verfahrensschritt 5 werden die Radmomente M_{wh1} und M_{wh2} neu berechnet und über die zugeordneten Stelleinrichtungen, insbesondere die Radbremseinrichtungen, erzeugt. Auf diese Weise wird das Differenzmoment M_{diff} zwischen den Rädern neu eingestellt. Die Einstellung erfolgt insbesondere in der Weise, dass das Fahrzeug trotz des in der grenzstabilen Fahrsituation erfolgten Lastwechsels stabil bleibt. Hierbei wird vorzugsweise das bestehende Momentenverhältnis dem Grunde nach umgekehrt, also ein ursprünglich größeres Radmoment an einem Fahrzeugrad in ein kleineres Moment bezogen auf das Radmoment am gegenüberliegenden Fahrzeugrad geändert. Die absolute Höhe der Radmomente wird neu festgelegt.

Die Grenzwerte M_{diff,lim} für das Differenzmoment M_{diff} und M_{kar,lim} für die Momentendifferenz zwischen gefiltertem und ungefiltertem Kardanmoment können als feste Werte vorgegeben werden. In Betracht kommt aber auch eine Ermittlung in Abhängigkeit aktueller Zustandsgrößen.

## Patentansprüche

1. Verfahren zur Erzeugung eines auf die Fahrzeugräder eines Fahrzeugs wirkenden Differenzmoments (M_{diff}), bei dem an zwei Fahrzeugrädern in definierten Fahrsituationen unterschiedlich hohe Radmomente (M_{wh1}, M_{wh2}) wirksam sind, wobei für den Fall, dass sich das Fahrzeug in einem Lastwechsel und zugleich in einer fahrdynamischen Grenzsituation befindet, in der unterschiedlich hohe Radmomente (M_{wh1}, M_{wh2}) an den Fahrzeugrädern anliegen, die Momentenverteilung zwischen den Fahrzeugrädern in der Weise geändert wird, **dadurch gekennzeichnet, dass** das Fahrzeugrad mit dem ursprünglich niedrigeren Radmoment (M_{wh1}, M_{wh2}) mit einem das andere Fahrzeugrad übersteigenden Radmoment (M_{wh1}, M_{wh2}) beaufschlagt wird.

2. Verfahren nach Anspruch 1, **dadurch gekennzeichnet, dass** für das Vorliegen einer fahrdynamischen Grenzsituation überprüft wird, ob das aus der Differenz der Radmomente (M_{wh1}, M_{wh2}) gebildete Differenzmoment (M_{diff}) einen Grenzwert (M_{diff,lim}) überschreitet.

3. Verfahren nach einem der Ansprüche 1 oder 2, **dadurch gekennzeichnet, dass** das Differenzmoment (M_{diff}) aus der Ist-Gierrate und/oder der Soll-Gierrate und/oder aus sonstigen Zustandsgrößen des Fahrzeugs bestimmt wird.

4. Verfahren nach einem der Ansprüche 1 bis 3, **dadurch gekennzeichnet, dass** ein Lastwechsel anhand der Änderung im Verlauf des Antriebsmoments oder einer damit korrelierenden Größe detektiert wird.

5. Verfahren nach Anspruch 4, **dadurch gekennzeichnet, dass** ein Lastwechsel anhand der Änderung im Verlauf des Kardanmoments detektiert wird, das in einer Kardanwelle im Fahrzeug wirksam ist.

6. Verfahren nach Anspruch 4 oder 5, **dadurch gekennzeichnet, dass** zur Detektion des Lastwechsels das betrachtete Moment gefiltert und die Differenz von ungefiltertem und gefiltertem Moment gebildet wird, wobei ein Lastwechsel vorliegt, falls die Differenz einen Schwellenwert überschreitet.

7. Verfahren nach einem der Ansprüche 1 bis 6, **dadurch gekennzeichnet, dass** das Differenzmoment durch einen Bremseneingriff erzeugt wird.

8. Verfahren nach einem der Ansprüche 1 bis 7, **dadurch gekennzeichnet, dass** das Differenzmoment durch eine Verteilung des Antriebsmoments erzeugt wird.

9. Regel- bzw. Steuergerät besouders aufgelegt zur Durchführung des Verfahrens nach einem der Ansprüche 1 bis 8.

10. Vorrichtung in einem Fahrzeug, insbesondere Elektronisches Stabilitätsprogramm (ESP) mit einem Regel- bzw. Steuergerät nach Anspruch 9.

11. Vorrichtung nach Anspruch 10, **dadurch gekennzeichnet, dass** eine Stelleinrichtung zur Erzeugung eines Differenzmoments zwischen zwei Fahrzeugrädern vorgesehen ist.

## Claims

1. Method for generating a differential torque (M_{diff}) acting on the wheels of a vehicle, in which wheel torques (M_{wh1}, M_{wh2}) of different magnitudes are effective at two vehicle wheels in defined driving situations, wherein in the event of the vehicle being in a load change and at the same time in a vehicle movement dynamics boundary situation in which wheel torques (M_{wh1}, M_{wh2}) of different magnitudes are applied to the vehicle wheels, the torque distribution between the vehicle wheels is changed, **characterized in that** the vehicle wheel with the originally relatively low wheel torque (M_{wh1}, M_{wh2}) is subjected to a wheel torque (M_{wh1}, M_{wh2}) which exceeds the other vehicle wheel.

2. Method according to Claim 1, **characterized in that** for the presence of a vehicle movement dynamics boundary situation it is checked whether the differential torque (M_{diff}) which is formed from the difference between the wheel torques (M_{wh1}, M_{wh2}) exceeds a limiting value (M_{diff,lim}).

3. Method according to one of Claims 1 or 2, **characterized in that** the differential torque (M_{diff}) is determined from the actual yaw rate and/or the setpoint yaw rate and/or from other status variables of the vehicle.

4. Method according to one of Claims 1 to 3, **characterized in that** a load change is detected on the basis of the change in the profile of the drive torque or of a variable correlating thereto.

5. Method according to Claim 4, **characterized in that** a load change is detected on the basis of the change in the profile of the Cardan torque which is effective in a Cardan shaft in the vehicle.

6. Method according to Claim 4 or 5, **characterized in that** in order to detect the load change the torque under consideration is filtered and the difference between the unfiltered torque and the filtered torque is formed, wherein a load change is present if the difference exceeds a threshold value.

7. Method according to one of Claims 1 to 6, **characterized in that** the differential torque is generated by a braking intervention.

8. Method according to one of Claims 1 to 7, **characterized in that** the differential torque is generated by a distribution of the driving torque.

9. Closed-loop and/or open-loop control device, particularly configured for carrying out the method according to one of Claims 1 to 8.

10. Device in a vehicle, in particular electronic stability programme (ESP), having a closed-loop and/or open-loop control device according to Claim 9.

11. Device according to Claim 10, **characterized in that** an actuating device for generating a differential torque between two vehicle wheels is provided.

## Revendications

1. Procédé pour générer un moment différentiel (M_{diff}) agissant sur les roues de véhicule d'un véhicule, avec lequel des moments de roue (M_{wh1}, M_{wh2}) de niveaux différents agissent sur deux roues de véhicule dans des situations de conduite définies, la distribution des moments entre les roues de véhicule étant modifiée dans le cas où le véhicule se trouve en changement de charge et en même temps dans une situation limite du point de vue de la dynamique de conduite, dans lequelle des moments de roue (M_{wh1}, M_{wh2}) de niveaux différents sont appliqués aux roues de véhicule, **caractérisé en ce que** la roue de véhicule ayant le moment de roue (M_{wh1}, M_{wh2}) originellement le plus faible est soumise à un moment de roue (M_{wh1}, M_{wh2}) qui excède celui de l'autre roue de véhicule.

2. Procédé selon la revendication 1, **caractérisé en ce que** pour la présence d'une situation limite du point de vue de la dynamique de conduite, il est vérifié si le moment différentiel (M_{diff}) formé à partir de la différence des moments de roue (M_{wh1}, M_{wh2}) dépasse une valeur limite (M_{diff,lim}).

3. Procédé selon l'une des revendications 1 ou 2, **caractérisé en ce que** le moment différentiel (M_{diff}) est déterminé à partir du taux de lacet réel et/ou du taux de lacet de consigne et/ou à partir d'autres grandeurs d'état du véhicule.

4. Procédé selon l'une des revendications 1 à 3, **caractérisé en ce qu'**un changement de charge est détecté au moyen de la modification dans le tracé du moment d'entraînement ou d'une grandeur qui y est corrélée.

5. Procédé selon la revendication 4, **caractérisé en ce qu'**un changement de charge est détecté au moyen de la modification dans le tracé du moment de cardan qui agit dans un arbre à cardan dans le véhicule.

6. Procédé selon la revendication 4 ou 5, **caractérisé en ce que** pour détecter le changement de charge, le moment observé est filtré et la différence entre le moment filtré et non filtré est formée, un changement de charge étant présent si la différence dépasse une valeur de seuil.

7. Procédé selon l'une des revendications 1 à 6, **caractérisé en ce que** le moment différentiel est généré par une intervention de freinage.

8. Procédé selon l'une des revendications 1 à 7, caractérisé en ce le moment différentiel est généré par une distribution du moment d'entraînement.

9. Appareil de régulation et de commande spécialement conçu pour mettre en oeuvre le procédé selon l'une des revendications 1 à 8.

10. Dispositif dans un véhicule, notamment programme de stabilité électronique (ESP) avec un appareil de régulation et de commande selon la revendication 9.

11. Dispositif selon la revendication 10, **caractérisé en ce qu'**il est prévu un dispositif de réglage pour générer un moment différentiel entre deux roues de véhicule.
